# EUROPÄISCHE PATENTANMELDUNG

(11) **EP 1 529 433 A1**
(43) Veröffentlichungstag der Anmeldung: **11.05.2005**
(21) Anmeldenummer: 04026352.7
(22) Anmeldetag: 05.11.2004
(51) Int. Cl.: A01D 34/73

(54) **Rasenmäher**

(30) Priorität: 08.11.2003 DE 10352284
(71) Anmelder: Scheppach, Fritz, 89335 Ichenhausen (DE)
(72) Erfinder: Scheppach, Fritz, 89335 Ichenhausen (DE)
(74) Vertreter: Munk, Ludwig, Dipl.-Ing.

(57) **Zusammenfassung**

Bei einem Rasenmäher mit einem Sichelmähwerk bestehend aus einem wenigstens zwei Arme (3) aufweisenden, um eine stehende Achse rotierbaren Rotor (2), dessen Arme (3) jeweils ein im Bereich ihres radial äußeren Endes vorgesehenes, mit einer Schneide (5) versehenes, mittels wenigstens einer Verschraubung (6) lösbar mit dem zugeordneten Arm (3) des Rotors (2) verbindbares Werkzeug (4) tragen, lassen sich dadurch eine einfache und bedienungsfreundliche Bauweise sowie eine hohe Sicherheit erreichen, dass jedes Werkzeug (4) eine in Schnittrichtung hinter der über seine radiale Breite durchgehenden Schneide (5) vorgesehene, quer zur Schnittrichtung verlaufende, zumindest über seine seitlichen Endbereiche durchgehende Anstellfläche (10) und einen rückwärtigen Halter (9) aufweist, dass jeder Arm (3) des Rotors (2) eine der Anstellfläche (10) zugeordnete Stützfläche (11) und eine dem Halter (9) zugeordnete Auflagefläche (12) aufweist und dass jedes Werkzeug (4) am jeweils zugeordneten Arm (3) des Rotors (2) mittels wenigstens einer Senkschraube (17) festlegbar ist, die mit ihrem Schaft in ein einerseits vorgesehenes Gewindeloch einschraubbar und mit ihrem Kopf in eine andererseits vorgesehene Senkung (18) eingreift.

## Beschreibung

Die Erfindung betrifft einen Rasenmäher mit einem Sichelmähwerk bestehend aus einem wenigstens zwei Arme aufweisenden, um eine stehende Achse rotierbaren Rotor, dessen Arme jeweils ein im Bereich ihres radial äußeren Endes vorgesehenes, mit einer Schneide versehenes Werkzeug tragen, das mittels wenigstens einer Schraube lösbar mit dem zugeordneten Arm des Rotors verbindbar ist.

Bei einer bekannten Anordnung eingangs erwähnter Art ist das Werkzeug praktisch als radial äußerer Abschnitt des zugeordneten, in zwei Abschnitt unterteilten Rotorarms ausgebildet, dessen Abschnitte in Drehrichtung formschlüssig ineinander eingreifen und durch eine Schraube zusammengehalten werden. Der äußere, das Werkzeug bildende Abschnitt ist mit einer angeformten Schneide versehen, die gegenüber der in Schnittrichtung vorderen Kante des Rotorarms zurückspringt, so dass sich praktisch eine der Schneide zugeordnete Randnische ergibt, die radial innen durch eine quer zur Schneide verlaufende Kante begrenzt wird. Bei dieser bekannten Anordnung kann das Werkzeug zum Schärfen der Schneide zwar vom zugeordneten inneren Abschnitt des Rotorarms abgenommen werden. Infolge der vorstehend erwähnten, der Schneide zugeordneten Randnische gestaltet sich das Schärfen der Schneide jedoch vergleichsweise schwierig. Es besteht auch die Gefahr, dass nicht alle Schneiden des Rotors gleichmäßig nachgeschliffen werden, was zu Unwuchterscheinungen führen kann. Außerdem ist davon auszugehen, dass der Formschluss zwischen den beiden Rotorabschnitten nicht stramm genug ist, so dass die Schraube auf Scherung beansprucht wird und dass die Schnittkräfte zu auf die Schraube wirkenden Stößen führen können, was sich ungünstig auf die Lebensdauer und Betriebssicherheit auswirkt und eine Schraubensicherung unentbehrlich macht. Ein weiterer Nachteil ist darin zu sehen, dass der hier als Werkzeug fungierende, äußere Rotorarmabschnitt ein vergleichsweise großes Bauteil darstellt, das aus Kostengründen nicht aus hochwertigem, für eine hohe Schnittqualität günstigem Material hergestellt werden kann, was sich ungünstig auf die Standzeiten und die Schnittqualität auswirkt. Die bekannte Anordnung erweist sich daher als nicht einfach, bedienungsfreundlich und sicher genug.

Hiervon ausgehend ist es daher die Aufgabe der vorliegenden Erfindung, bei einem Rasenmäher eingangs erwähnter Art die Nachteile der bekannten Anordnungen zu vermeiden und eine einfache und kostengünstige Bauweise sowie eine einfache Handhabung und eine hohe Funktionssicherheit zu gewährleisten.

Diese Aufgabe wird erfindungsgemäß dadurch gelöst, dass jedes Werkzeug eine in Schnittrichtung hinter der über seine Breite durchgehenden Schneide vorgesehene, quer zur Schnittrichtung verlaufende, zumindest über seine seitlichen Endbereiche durchgehende Anstellfläche und einen von der Schneide abgewandten Halter aufweist, dass jeder Arm des Rotors eine der Anstellfläche zugeordnete Stützfläche und eine dem Halter zugeordnete Auflagefläche aufweist und dass jedes Werkzeug am jeweils zugeordneten Arm des Rotors mittels wenigstens einer Senkschraube festlegbar ist, die mit ihrem Schaft in ein einerseits vorgesehenes Gewindeloch einschraubbar ist und mit ihrem Kopf in eine andererseits vorgesehene Senkung eingreift.

Diese Maßnahmen ergeben ein vergleichsweise kompaktes Werkzeug, das mit in Kauf nehmbaren Mehrkosten aus einem hochwertigen Material hergestellt werden kann, was eine lange Standzeit der Schneide gewährleistet. Trotz der Kompaktheit des erfindungsgemäßen Werkzeugs werden aufgrund der zuverlässigen Anlage der werkzeugseitigen Anstellfläche an der zugeordneten, rotorarmseitigen Stützfläche die Schnittkräfte zuverlässig auf den Rotorarm abgeleitet. Aufgrund der genannten Anlage ist die Verschraubung zwischen Werkzeug und Rotorarm entlastet. Es sind keinerlei auf die Verschraubung wirkende Scherkräfte zu befürchten. Zum Schärfen der Schneide des Werkzeugs kann dieses einfach abgenommen werden. Da die Schneide über die ganze Werkzeugbreite durchgeht, lässt sich auf einfache Weise ein genauer Schärfvorgang erreichen, so dass Unwuchterscheinungen nicht zu befürchten sind. Die zum Einsatz kommende Senkschraube bzw. -schrauben besitzen eine vergleichsweise große Auflagefläche und führen daher auch ohne Schraubensicherung zu einem zuverlässigen Halt.

Vorteilhafte Ausgestaltungen und zweckmäßige Fortbildungen der übergeordneten Maßnahmen sind in den Unteransprüchen angegeben. So können die Achsen der der Senkschraube zugeordneten Gewindebohrung und des zugeordneten Senkkopfes zweckmäßig in Schnittrichtung derart gegeneinander versetzt sein, dass das jeweils rotorarmseitig vorgesehene Element von der benachbarten Stützfläche weiter entfernt ist als das werkzeugseitig vorgesehene Element. Aufgrund dieses Achsversatzes wird beim Anziehen der Senkschraube eine auf das Werkzeug wirkende Verschiebebewegung bewirkt, die dazu führt, dass die werkzeugseitige Anstellfläche an die zugeordnete, rotorarmseitige Stützfläche angepresst wird, so dass sich eine satte, zuverlässige Anlage und damit ein wackelfreier Sitz ergibt, durch den die Schnittkräfte zuverlässig auf den Rotorarm übertragen werden.

Eine weitere besonders zu bevorzugende Maßnahmen kann darin bestehen, dass die dem Kopf der Senkschraube zugeordnete Senkung am inneren Ende eines von einem benachbarten Rand des die Senkung enthaltenden Organs ausgehenden Schlitzes vorgesehen ist. Hierdurch wird sichergestellt, dass die Senkschraube bei der Demontage des Werkzeugs nicht ganz entfernt, sondern nur soweit gelöst werden muss, dass ihr Senkkopf außer Eingriff mit der zugeordneten Senkung kommt. Dies gewährleistet eine hohe Bedienungsfreundlichkeit.

Zweckmäßig kann die Senkung dem Rotorarm zugeordnet und am inneren Ende eines von der Stützfläche ausgehenden Schlitzes des Rotorarms vorgesehen sein.

Dies ermöglicht in vorteilhafter Weise eine auf der Oberseite des Rotorarms aufliegende Anordnung des Halters des Werkzeugs und eine Betätigung der Senkschraube von unten, was eine hohe Bedienungsfreundlichkeit gewährleistet. Gleichzeitig wird hierdurch sichergestellt, dass die Senkschraube bei der Demontage des Werkzeugs hiermit im Eingriff bleibt, was die Handhabung erleichtert.

In weiterer Fortbildung der übergeordneten Maßnahmen kann der Rotorarm eine dem Werkzeug zugeordnete Randausnehmung aufweisen, in welche das Werkzeug mit einem die Schneide enthaltenden Messerblatt eingreift. Auf diese Weise lässt sich auch eine radiale Anlage des Werkzeugs erreichen. Gleichzeitig erleichtert die dem Werkzeug zugeordnete, armseitige Randausnehmung die richtige Positionierung des Werkzeugs und erhöht damit die Bedienungsfreundlichkeit. Zweckmäßig kann die innere, quer zur Schnittrichtung verlaufende Begrenzung der Randausnehmung eine einer werkzeugseitigen Stufe zwischen Halter und Messerblatt zugeordnete Stützfläche bilden.

Vorteilhaft kann die Randausnehmung zwei den beiden Seitenflanken des Messerblatts zugeordnete Seitenflanken aufweisen, wobei an den Seitenflanken der Randausnehmung und des Messerblatts in gegenseitigen Eingriff kommende Stützflächen vorgesehen sein können. Diese Maßnahme ergibt in vorteilhafter Weise eine zuverlässige, armseitige Abstützung des Messerblatts senkrecht zur Blattebene. Das Messerblatt kann daher aus sehr dünnem Material bestehen, was nicht nur den Schärfvorgang erleichtert, sondern auch die Gestehungskosten absenkt. Die genannten Maßnahmen ermöglichen in vorteilhafter Weise sogar eine zweiteilige Werkzeugausbildung mit einem lösbar am Halter anbringbaren Messerblatt. Dieses kann daher auch als Wegwerfteil ausgebildet sein, womit jeder Schärfvorgang entfällt.

Die beidseitige Begrenzung der Randausnehmung bietet auch die Möglichkeit, dass die durch die Randausnehmung unterbrochene Vorderkante des Rotorarms im die Randausnehmung flankierenden Bereich als dem Werkzeug zugeordnete Stützfläche ausgebildet sein kann. Das Werkzeug benötigt dabei lediglich gegenüber dem in die Randausnehmung eingreifenden Bereich seitlich vorspringende, als Anstellfläche fungierende Kanten. Hierzu kann das Werkzeug im Bereich hinter der Schneide einfach mit einer beidseitigen Breitenreduzierung versehen sein.

Eine weitere vorteilhafte Maßnahme kann darin bestehen, dass die Schneide des Werkzeugs gegenüber einer Radialen bezüglich der Rotorachse schräg angestellt ist, was mit dem erfindungsgemäßen Werkzeug ohne Weiteres verwirklicht werden kann. Die genannte Schrägstellung ergibt in vorteilhafter Weise einen ziehenden Schnitt und stellt zudem sicher, dass Fremdkörper wie Steine etc. abgewiesen werden, was sich schonend nicht nur auf die Schneide, sondern auch auf den Rotorantrieb auswirkt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar. In der nachstehend beschriebenen Zeichnung zeigen:
- Figur 1: eine Draufsicht auf einen mit einem Werkzeug bestückten Rotor eines Sichelrasenmähers,
- Figur 2: einen Schnitt entlang der Linie II/II in Figur 1,
- Figur 3: eine Teildraufsicht auf den Rotor von Figur 1 bei abgenommenem Werkzeug,
- Figur 4: eine explosionsartige Darstellung von Figur 2,
- Figur 5: ein Beispiel für ein zweiteiliges Werkzeug,
- Figur 6: eine Variante zu Figur 1 mit schräg gestelltem Werkzeug,
- Figur 7: eine Teildraufsicht auf den Rotor von Figur 6 bei abgenommenem Werkzeug,
- Figur 8: eine Variante zu Figur 6 mit seitlich abgestütztem Messerblatt,
- Figur 9: eine Teildraufsicht auf den Rotor von Figur 8 bei abgenommenem Werkzeug,
- Figur 10: einen Schnitt entlang der Linie X/X in Figur 8,
- Figur 11: eine Seitenansicht des Werkzeugs von Figur 8,
- Figur 12: ein Beispiel für ein Werkzeug mit abnehmbarem Messerblatt,
- Figur 13: ein weiteres Beispiel mit einem an die Vorderkante des Rotorarms anstellbaren Werkzeug,
- Figur 14: eine Teildraufsicht auf den Rotor von Figur 12 bei abgenommenem Werkzeug und
- Figur 15: einen Schnitt entlang der Linie XV/XV in Figur 13.

Das Anwendungsgebiet der vorliegenden Erfindung sind sogenannte Sichel-Rasenmäher. Der grundsätzliche Aufbau und die Wirkungsweise derartiger Rasenmäher sind an sich bekannt und bedürfen daher im vorliegenden Zusammenhang keiner näheren Erläuterung mehr.

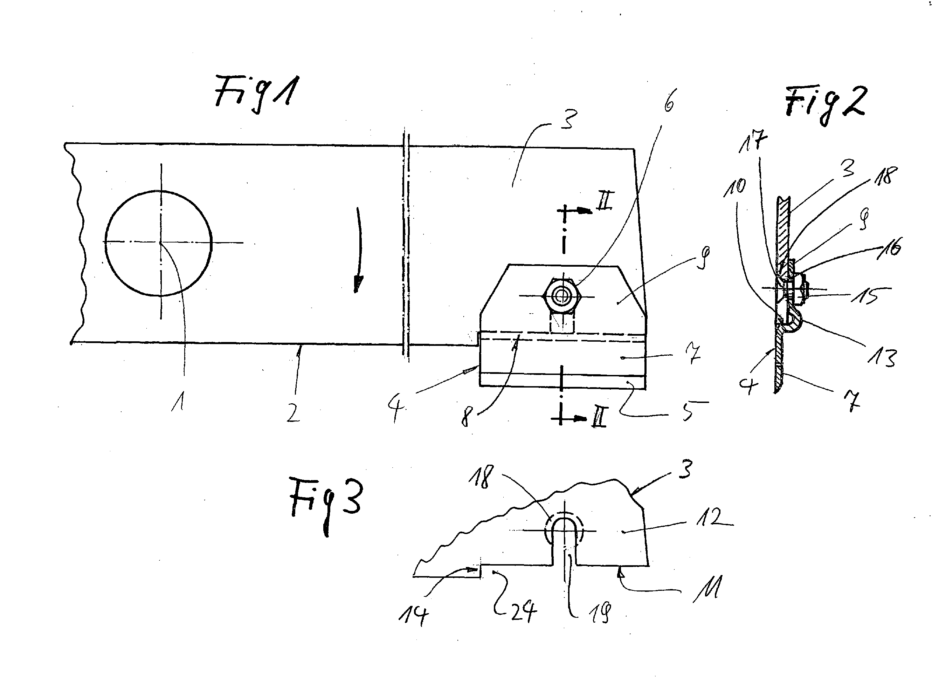

Das Mähwerk eines Sichelrasenmähers enthält einen in Figur 1 angedeuteten, um eine stehende Achse 1 drehbar gelagerten, mittels eines nicht näher dargestellten Motors antreibbaren Rotor 2, der mehrere Arme 3, hier zwei einander diametral gegenüberliegende Arme 3 aufweist. Die über ihre Länge nicht unterteilten Arme 3 tragen jeweils ein im Bereich des äußeren Endes ihrer in Drehrichtung vorderen Kante angeordnetes, abnehmbares Werkzeug 4, das mit einer Schneide 5 versehen ist, die über die ganze vordere Breite des plättchenförmigen Werkzeugs durchgeht. Der die Schneide 5 enthaltende Bereich des Werkzeugs 4 springt gegenüber der in Drehrichtung vorderen Kante des Rotorarms in Drehrichtung vor. Das Werkzeug 4 ist mittels einer Schraubverbindung 6 lösbar am zugeordneten Arm 3 des Rotors 2 festlegbar. Das Werkzeug 4 kann daher zum Schärfen der Schneide 5 abgenommen werden, während der Rotor 2 in Stellung bleibt. Es wäre auch denkbar, das Werkzeug 4 einfach als Austauschteil auszubilden, das nach erfolgtem Verschleiß der Schneide 5 einfach ersetzt wird.

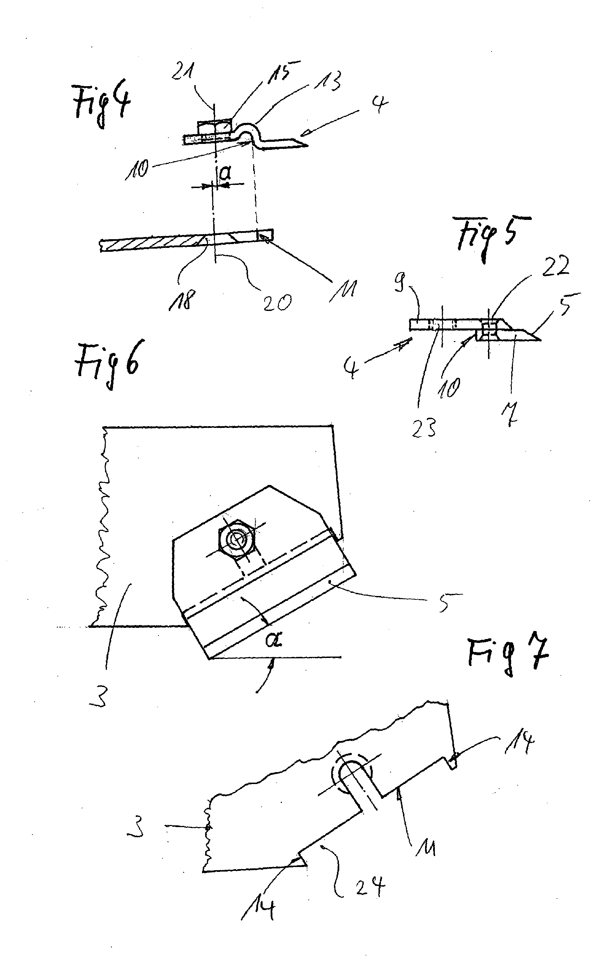

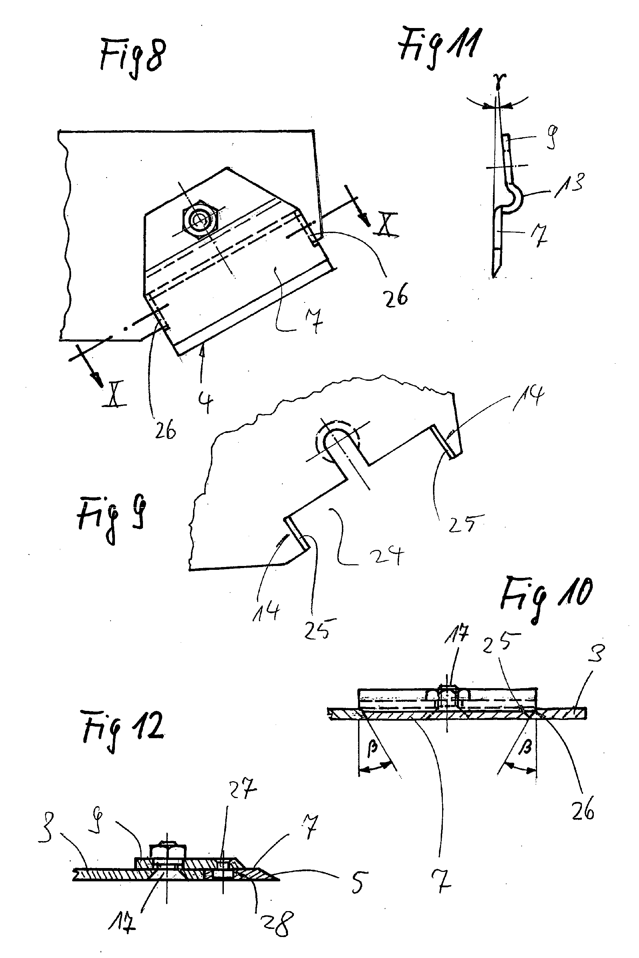

Das Werkzeug 4 besitzt ein in Schnittrichtung vorderes, die Schneide 5 enthaltendes Messerblatt 7 und einen hierzu displanaren, unter Bildung einer vorzugsweise schneidenparallelen Stufe 8 an das Messerblatt anschließenden, im dargestellten Ausführungsbeispiel plattenförmigen Halter 9. Die Stufe 8 kann dabei, wie Figur 2 anschaulich zeigt, eine in Schnittrichtung hinter der Schneide 5 angeordnete, quer zur Schnittrichtung verlaufende, schulterförmige Anstellfläche 10 bilden, mit der das Werkzeug 4 an einer am besten aus Figur 3 erkennbaren, zugeordneten Stützfläche 11 des Rotorarms 3 abgestützt werden kann. Der Halter 9 liegt auf einer zugeordneten, hier an die Stützfläche 11 anschließenden Auflagefläche 12 des Rotorarms 3 auf und wird durch die Verschraubung 6 hiermit verspannt. Zweckmäßig befindet sich die Auflagefläche 12 auf der Oberseite des Rotorarms 3, so dass das Werkzeug 4 mit seinem Halter 9 von oben auf dem zugeordneten Rotorarm 3 aufliegt. Zur Gewährleistung einer hohen Standfestigkeit der Stützfläche 11 und der Auflagefläche 12 kann der Arm 3 im Bereich dieser Flächen gehärtet sein. Ebenso kann das Werkzeug 4 zumindest im Bereich der Schneide 5 und der Anstellfläche 10 gehärtet sein.

Im dargestellten Beispiel ist das Werkzeug 4 als einteiliger Pressformling ausgebildet. Der Übergang zwischen Messerblatt 7 und Halter 9 ist dabei, wie Figur 2 weiter zeigt, als sickenartige Kröpfung 13 ausgebildet, was eine breite Schulter mit einer exakten Anstellfläche 10 ergibt, an der die armseitige Stützfläche 11 mit der ganzen Dicke des Arms 3 zur Anlage kommen kann.

Die Stützfläche 11 kann in einfachen Fällen einfach als Abschnitt der in Schnittrichtung vorderen Schmalseite des Arms 3 ausgebildet sein. Der Arm 3 kann aber auch mit einer zweckmäßig durch eine Ausklinkung gebildeten Randnische versehen sein, deren quer zur Schnittrichtung verlaufende, innere Begrenzung als Stützfläche 11 fungieren kann, an der das Werkzeug mit der im Bereich der Stufe 8 vorgesehenen Anstellfläche zur Anlage bringbar ist. Die genannte Randnische wird zumindest radial innen durch eine quer zur Stützfläche 11 verlaufende Kante 14 begrenzt, an der das Werkzeug 4 mit seiner radial inneren Kante zur Anlage kommen kann, wie aus Figur 1 ersichtlich ist. Die Breite der genannten Randnische entspricht der Breite des Werkzeugs 4. Die Tiefe der Randnische ist kleiner als die quer zur Schnittrichtung gesehene Breite des Messerblatts 7, so dass die Schneide 5 gegenüber der in Drehrichtung vorderen Kante des Arms 2 vorspringt. Bei der Ausführung gemäß Figur 3 ist die Randnische am radial äußeren Armende offen. Es wäre aber auch denkbar, eine radial innen und radial außen durch eine Seitenkante 14 begrenzte, die Stützfläche 11 enthaltende Randnische vorzusehen, wie beispielsweise in Figur 7 gezeigt ist.

Das Werkzeug 4 liegt, wie schon erwähnt, auf der Oberseite des zugeordneten Rotorarms auf und ist hiermit verschraubt. Hierzu ist das Werkzeug 4 mit einer Gewindebohrung versehen, in die eine Schraube von unten einschraubbar ist. Die Gewindebohrung kann in das dem Werkzeug 4 zugrundeliegende Material eingeschnitten sein. Im dargestellten Beispiel ist das Werkzeug 4, wie aus Figur 2 ersichtlich ist, mit einer fest aufgesetzten, die Gewindebohrung enthaltenden Gewindemutter 15 versehen, der eine Durchgangsausnehmung 16 des Werkzeugs 4 zugeordnet ist. Die Gewindemutter 15 kann aufgeschweißt oder aufgepresst etc. sein. Die in die Gewindebohrung einschraubbare Schraube ist, wie Figur 2 weiter zeigt, als Senkschraube 17 ausgebildet, deren konischer Senkkopf bei angezogener Schraube in eine nach unten sich erweiternde, konische Senkung 18 des Rotorarms 3 eingreift. Aufgrund der konischen Gestaltung ergibt sich eine vergleichsweise große gegenseitige Anlagefläche, so dass die hierbei erzeugte Reibkraft zur Sicherung der Schraube ausreicht und keine zusätzliche Schraubensicherung benötigt wird.

Im dargestellten Beispiel ist eine bezüglich der radialen Erstreckung des Werkzeugs 4 mittig angeordnete Verschraubung 6 vorgesehen. Selbstverständlich wäre es auch denkbar, mehrere, vorzugsweise symmetrisch zur genannten Mitte vorgesehene Verschraubungen zu verwenden. In der Regel genügt jedoch eine derartige Verschraubung, da das Werkzeug 4 durch seine an der armseitigen Stützfläche 11 zur Anlage kommende Anstellfläche 10 zuverlässig am Rotorarm 3 abgestützt ist und durch die Verschraubung lediglich gegen Herausfallen gesichert werden muss. Durch Lösen bereits einer Verschraubung ist daher hier in vorteilhafter Weise eine Demontage des Werkzeugs 4 möglich.

Die Senkung 18 befindet sich, wie aus Figur 3 entnehmbar ist, am inneren Ende eines von einem benachbaren Rand des die Senkung 18 enthaltenden Organs ausgehenden Schlitzes 19. Im dargestellten Beispiel mit dem Arm 3 zugeordneter Senkung 18 befindet sich diese am inneren Ende eines von der Stützfläche 11 ausgehenden Schlitzes 19. Hierdurch wird erreicht, dass die Senkschraube 17 bei der Montage bzw. Demontage des Werkzeugs 4 im Eingriff mit der werkzeugseitigen Mutter 15 bleiben kann. Es ist lediglich erforderlich, die Senkschraube 17 soweit herauszuschrauben, dass ihr Senkkopf außer Eingriff mit der Senkung 18 kommt. Sobald dies der Fall ist, kann die Senkschraube 17 im Schlitz 19 verschoben werden, wodurch eine Montage bzw. Demontage des Werkzeugs 4 mit bereits lose in Stellung gebrachter Senkschraube möglich ist, was die Handhabung erleichtert.

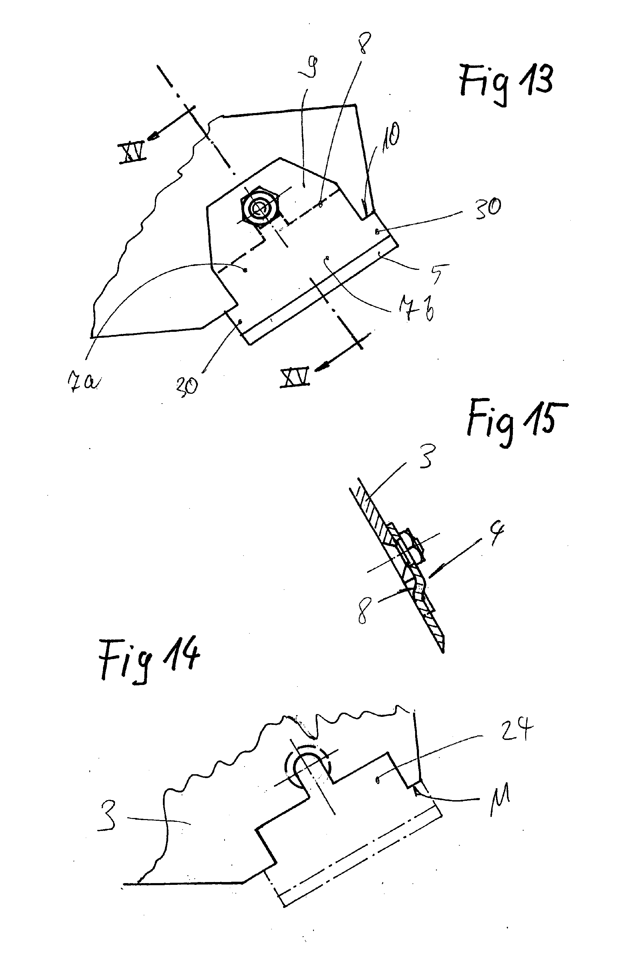

Der Abstand der Achse 20 der Senkung 18 von der benachbarten Stützfläche 11 ist, wie in Figur 4 angedeutet ist, größer als der Abstand der Achse 21 der Gewindebohrung der Mutter 15 von der benachbarten Anstellfläche 10. Infolge dieses größeren Abstand der Achse 20 des der Senkschraube 17 zugeordneten, armseitigen Elements, hier der Senkung 18, von der benachbarten Stützfläche 11 gegenüber dem Abstands der Achse 21 des der Senkschraube 17 zugeordneten, werkzeugseitigen Elements, hier der Gewindebohrung der Mutter 15, von der benachbarten Anstellfläche 10 ergibt sich bei der Montage ein in Figur 4 übertrieben angedeuteter Achsversatz a. Hierdurch wird beim Eingreifen des Kopfes der Senkschraube 17 in die zugeordnete Senkung 18 eine Verschiebebewegung bewirkt, durch welche die Anstellfläche 10 des Werkzeugs 4 zuverlässig an die armseitige Stützfläche 11 angepresst wird. Der Längenausgleich kann dabei durch die mittels der sickenartigen Kröpfung 13 bewirkte Federeigenschaft des Werkzeugs 4 bewerkstelligt werden. Der genannte Achsversatz führt daher zu einem besonders zuverlässigen, wackelfreien Sitz des Werkzeugs 4.

Anstelle eines einteiligen Werkzeugs 4, wie beispielsweise in Figur 4 gezeigt, kann auch, wie weiter oben schon angedeutet wurde, ein aus mehreren Teilen zusammengesetztes Werkzeug Verwendung finden. eine derartige Ausführung liegt der Figur 5 zugrunde. Dabei ist das die Schneide 5 enthaltende Messerblatt 7 vom zugeordneten Halter 9 übergriffen und durch Nieten 22 hiermit verbunden. Die von der Schneide 5 abgewandte Rückseite des vom Halter 9 übergriffenen Messerblatts 7 bildet hier die schulterförmige Anstellfläche 10. Diese Ausführung hat den Vorteil, dass das Messerblatt 7 und der Halter 9 aus unterschiedlichen Materialien bestehen können. Es ist daher möglich, für das Messerblatt 7 ein höherwertiges Material, beispielsweise Hartmetall zu verwenden. Der Halter 9 kann dabei vergleichsweise dick ausgeführt werden, so dass eine eingeschnittene Gewindebohrung 23 vorgesehen sein kann, wodurch eine aufgesetzte Mutter überflüssig wird.

Die Schneide 5 kann, wie bei dem der Figur 1 zugrundeliegenden Beispiel parallel zur Längsachse des zugeordneten Rotorarms 3 verlaufen. Vielfach kann es jedoch zweckmäßig sein, die Schneide 5, wie aus Figur 6 hervorgeht, gegenüber der Mittellängsachse des Rotorarms 3 unter einem Winkel α schräg anzustellen, so dass sich ein ziehender Schnitt ergibt. Außerdem wird hierdurch erreicht, dass mit der Schneide 5 kollidierende Fremdkörper, wie Steine etc. nach radial außen abgewiesen werden. Das Werkzeug 4 ist dabei gegenüber der Mittellängsachse des Arms 3 so verdreht, dass die innere Kante in Drehrichtung gegenüber der äußeren Kante vorspringt. In einem derartigen Fall kann es besonders zweckmäßig sein, das Werkzeug 4 im Bereich beider Seitenflanken seitlich abzustützen. Die dem Werkzeug 4 zugeordnete Randausnehmung 24 des Arms 3 ist hierzu, wie aus Figur 7 entnehmbar ist, als beidseitig begrenzte Randausklinkung ausgebildet, so dass sich an beiden Enden der Stützfläche 11 quer hierzu verlaufende, seitliche Seitenflanken 14 ergeben. Selbstverständlich könnte eine derartige, durch zwei Seitenflanken 14 begrenzte Randausnehmung 24 auch bei der Ausführung gemäß Figur 1 vorgesehen sein, wie oben schon erwähnt wurde.

Die Verwendung einer beidseitig durch Seitenflanken begrenzten Randausnehmung bietet in vorteilhafter Weise auch die Möglichkeit, das Messerblatt 7 des Werkzeugs 4 im Bereich seiner Seitenkanten senkrecht zur Messerebene abzustützen. Eine derartige Ausführung liegt den Figuren 8 bis 12 zugrunde. Zweckmäßig ist dabei die Randausnehmung 24 etwas tiefer als bei den obigen Beispielen, so dass sich demgegenüber längere Seitenflanken 14 ergeben. Ebenso ist das Messerblatt 7 entsprechend breiter als bei den obigen Beispielen. Die Seitenflanken 14 sind dabei mit in Figur 9 bezeichneten Sitzflächen 25 versehen, auf denen das Werkzeug 4, wie aus Figur 8 hervorgeht, mit geeigneten, im Bereich der Seitenflanken des Messerblatts 7 vorgesehen Gegensitzflächen 26 zur Auflage kommt. Die Sitzflächen 25 und Gegensitzflächen 26 sind, wie am besten aus Figur 10 hervorgeht, zweckmäßig unter einem Winkel β so gegenüber der Messerebene geneigt, dass sich ein kegelsitzartiger Eingriff ergibt. Die beiden seitlichen Sitzflächen 25 sind dementsprechend V-förmig gegeneinander geneigt. Dasselbe gilt für die seitlichen Gegensitzflächen 26. Diese seitliche Lagerung des Messerblatts 7 stellt sicher, dass dieses aus vergleichsweise dünnem Material bestehen kann. Dennoch ergibt sich aufgrund der seitlichen Lagerung eine zuverlässige Stabilisierung.

Um eine saubere gegenseitige Anlage der messerblattseitigen Gegensitzflächen 26 an den armseitigen Sitzflächen 25 zu gewährleisten kann der Halter 9 des Werkzeugs 4, wie aus Figur 11 hervorgeht, gegenüber der Ebene des Messerblatts 7 um einen kleinen, nach hinten sich verengenden Winkel Y geneigt sein. Dieser Winkel wird beim Anziehen der Senkschraube 17 rückgängig gemacht, wie aus Figur 10 entnehmbar ist. Hierdurch wird die durch die sickenartige Kröpfung 13 gebildete Feder gespannt, wodurch die Gegensitzflächen 26 an die Sitzflächen 25 angepresst werden, so dass sich ein spiel- und wackelfreier Sitz ergibt.

Die seitliche Abstützung des Messerblatts 7 ermöglicht in vorteilhafter Weise auch eine Ausführung mit abnehmbarem Messerblatt 7. Eine derartige Ausführung ist in der Figur 12 gezeigt. Da das Messerblatt 7 senkrecht zu seiner Ebene auf den Sitzflächen 26 abgestützt ist, benötigt es keine derartige Abstützung am Halter 9. Der Halter muss das Messerblatt 7 lediglich gegen Abheben von den Sitzflächen 25 und gegen Bewegungen entgegen der Drehrichtung sichern. Dementsprechend ist bei der Ausführung gemäß Figur 12 ein durch die Senkschraube 17 am zugeordneten Rotorarm 3 festlegbarer Halter 9 vorgesehen, der das Messerblatt 7 teilweise übergreift und mit nach unten vorspringenden Stiften 27 versehen ist, die in Achsrichtung lose, in eine jeweils zugeordnete Bohrung 28 des Messerblatts 7 eingreifen, wodurch dieses in der gewünschten Weise gesichert aber abnehmbar ist. Das die Schneide 5 enthaltende Messerblatt 7 kann bei dieser Ausführung separat ausgetauscht werden, was den Schärfvorgang erleichtern kann bzw. die Möglichkeit bietet, das Messerblatt 7, das hier ein vergleichsweise kleines Bauteil darstellt, einfach als Wegwerfteil auszubilden, das nach einem Verschleiß der Schneide 5 durch ein neues Messerblatt ersetzt wird. Die zuverlässige Anpressung des Messerblatts 7 an die armseitigen Sitzflächen 25 kann hier durch eine geeignete Verdickung oder bügelartige Gestaltung des Halters 9 erreicht werden. Die von der Schneide 5 abgewandte Rückseite des Messerblatts 7 bildet hierbei, ähnlich wie bei der Ausführung gemäß Figur 5 eine an die zugeordnete rotorarmseitige Stützfläche anpressbare Anstellfläche.

Bei den obigen Beispielen ist der innere Rand der Randausnehmung 24 als Stützfläche 11 ausgebildet. Es wäre aber auch denkbar, die Stützfläche 11, wie weiter oben schon erwähnt wurde, an die in Schnittrichtung vordere Kante des Rotorarms zu verlegen. Ein derartiges Beispiel enthalten die Figuren 13 bis 15. Dabei kann das Messerblatt mit einem rückwärtigen, über die Stufe 8 an den Halter 9 angeschlossenen Bereich 7a, wie bei den obigen Beispielen, in eine armseitige Randausnehmung 24 eingreifen, wobei eine seitliche Abstützung der in Figur 8 gezeigten Art vorgesehen sein kann oder nicht.

Zur Bildung einer von der Schneide 5 wegweisenden Anstellfläche 10 ist das Messerblatt hier mit einem gegenüber dem in die rotorarmseitige Ausnehmung 24 eingreifenden Bereich 7a beidseitig vorspringenden, die Schneide 5 enthaltenden Bereich 7b versehen. Die von der Schneide 5 abgewandte Rückseite der seitlichen Vorsprünge 30 des Bereichs 7b liegen fluchtend in einer Linie und bilden eine werkzeugseitige Anstellfläche 10. Die dieser zugeordnete, rotorarmseitige Stützfläche 11 wird durch die miteinander fluchtenden, an die Randausnehmung 24 sich anschließenden Randbereiche der von der Randausnehmung 24 unterbrochenen Vorderkante des Rotorarms 3 gebildet. Bei dieser Ausführung wird in vorteilhafter Weise im Bereich der Stufe 8 keine Anstellfläche benötigt. Die Stufe 8 kann daher, wie am besten aus Figur 15 ersichtlich ist, vergleichsweise flach ausgebildet sein. Eine Sicke der aus den Figuren 2 und 11 entnehmbaren Art ist hier in vorteilhafter Weise nicht erforderlich, was die Herstellung des Werkzeugs 4 erleichtert. Auch bei dieser Ausführung ist zweckmäßig ein Achsversatz der im Zusammenhang mit Figur 4 erläuterten Art vorgesehen, so dass auch hier die werkzeugseitige Anstellfläche 4 zuverlässig an die armseitige Stützfläche 11 angepresst wird.

## Patentansprüche

1. Rasenmäher mit einem Sichelmähwerk bestehend aus einem wenigstens zwei Arme (3) aufweisenden, um eine stehende Achse rotierbaren Rotor (2), dessen Arme (3) jeweils ein im Bereich ihres radial äußeren Endes vorgesehenes, mit einer Schneide (5) versehenes, mittels wenigstens einer Verschraubung (6) lösbar mit dem zugeordneten Arm (3) des Rotors (2) verbindbares Werkzeug (4) tragen, **dadurch gekennzeichnet, dass** jedes Werkzeug (4) eine in Schnittrichtung hinter der über seine radiale Breite durchgehenden Schneide (5) vorgesehene, quer zur Schnittrichtung verlaufende, zumindest über seine seitlichen Endbereiche durchgehende Anstellfläche (10) und einen von der Schneide (5) abgewandten Halter (9) aufweist, dass jeder Arm (3) des Rotors (2) eine der Anstellfläche (10) zugeordnete Stützfläche (11) und eine dem Halter (9) zugeordnete Auflagefläche (12) aufweist und dass jedes Werkzeug (4) am jeweils zugeordneten Arm (3) des Rotors (2) mittels wenigstens einer Senkschraube (17) festlegbar ist, die mit ihrem Schaft in ein einerseits vorgesehenes Gewindeloch einschraubbar und mit ihrem Kopf in eine andererseits vorgesehene Senkung (18) eingreift.

2. Rasenmäher nach Anspruch 1, **dadurch gekennzeichnet, dass** der Abstand der Achse des der Senkschraube (16) zugeordneten, armseitigen Elements von der benachbarten Stützfläche (11) größer als der Abstand der Achse des halterseitigen, der Senkschraube (17) zugeordneten Elements von der benachbarten Anstellfläche ist und dass die Senkung (18) dem Arm (3) des Rotors (2) zugeordnet ist.

3. Rasenmäher nach einem der vorhergehenden Ansprüche, **dadurch gekennzeichnet, dass** die dem Halter (9) zugeordnete Auflagefläche (12) auf der Oberseite und die Senkung (18) auf der Unterseite des Arms (3) des Rotors (2) vorgesehen sind.

4. Rasenmäher nach einem der vorhergehenden Ansprüche, **dadurch gekennzeichnet, dass** die Senkung (18) am inneren Ende eines von einem benachbarten Rand des die Senkung (18) enthaltenden Organs ausgehenden Schlitzes (19) und am inneren Ende eines von der Stützfläche (11) ausgehenden Schlitzes (19) des Arms (3) des Rotors (2) vorgesehen ist.

5. Rasenmäher nach einem der vorhergehenden Ansprüche, **dadurch gekennzeichnet, dass** eine bezüglich der radialen Erstreckung des Werkzeugs (4) mittig angeordnete Senkschraube (17) vorgesehen ist.

6. Rasenmäher nach einem der vorhergehenden Ansprüche, **dadurch gekennzeichnet, dass** das Werkzeug ein gegenüber dem rückwärtigen Halter (9) vorspringendes, die Schneide (5) enthaltendes Messerblatt (7) aufweist, das in Schnittrichtung breiter als die Schneide (5) ist, wobei der Halter (9) und das Messerblatt (7) displanar sind und eine schneidenparallele Stufe (8) bilden und das Messerblatt (7) lösbar am Halter (9) festlegbar ist, und wobei der Halter (9) das Messerblatt (7) übergreift und mit Stiften (27) versehen ist, die in zugeordnete Ausnehmungen (28) des Messerblatts (7) eingreifen, das im Bereich seiner seitlichen Enden mit Gegensitzflächen (26) versehen ist, die auf zugeordneten Sitzflächen (25) des Arms (3) abstützbar sind.

7. Rasenmäher nach einem der vorhergehenden Ansprüche, **dadurch gekennzeichnet, dass** das Werkzeug (4) einstückig ausgebildet und mit einer angeformten, den Halter mit dem Messerblatt verbindenden Stufe (8) versehen ist, die die Anstellfläche (10) enthält, wobei der Halter (9) über eine die Stufe (8) mit der Anstellfläche (10) enthaltende, sickenartige Kröpfung (13) mit dem die Schneide (5) enthaltenden Messerblatt (7) verbunden ist.

8. Rasenmäher nach einem der vorhergehenden Ansprüche, **dadurch gekennzeichnet, dass** das Werkzeug (4) mit seitlichen Vorsprüngen (30) versehen ist, deren von der Schneide (5) abgewandter Rand die Anstellfläche (10) bildet und dass die dieser zugeordnete armseitige Stützfläche (11) im Bereich des in Drehrichtung vorderen Rands des Rotorarms (3) vorgesehen ist, wobei das Werkzeug zur Bildung der Anstellfläche (10) im Bereich hinter der Schneide (5) beidseitig gegenüber dem die Schneide (5) enthaltenden Bereich (7b) in der Breite reduziert ist.

9. Rasenmäher nach einem der vorhergehenden Ansprüche, **dadurch gekennzeichnet, dass** das Werkzeug (4) mit einem von der Schneide (5) abgewandten Bereich des Messerblatts (7) in eine Randausnehmung (24) des zugeordneten Arms (3) des Rotors (2) eingreift, welche zwei den beiden Seitenflanken des Messerblatts (7) zugeordnete Seitenflanken (14) aufweist, wobei die Seitenflanken (14) der Randausnehmung (24) mit Sitzflächen (25) versehen sind, an denen werkzeugseitige Gegensitzflächen (26) zur Anlage bringbar sind, und wobei die Sitzflächen (25) und Gegensitzflächen (26) jeweils V-förmig gegeneinander geneigt sind.

10. Rasenmäher nach Anspruch 9, **dadurch gekennzeichnet, dass** das Werkzeug (4) mit einem an den Halter (9) anschließenden Bereich (7a) des Messerblatts (7) in die rotorarmseitige, beidseitig begrenzte Randausnehmung (24) eingreift, dass der die Schneide (5) enthaltende Bereich (7b) des Messerblatts (7) gegenüber dem in die Randausnehmung (24) des Rotorarms eingreifenden Bereich (7a) beidseitig seitlich vorspringt und dass die an die Randausnehmung (24) anschließenden, fluchtenden Bereiche der Vorderkante des Rotorarms (3) die Stützfläche (11) bilden.

11. Rasenmäher nach einem der vorhergehenden Ansprüche, **dadurch gekennzeichnet, dass** die Schneide (5) gegenüber der Mittellängsachse des zugeordneten Arms (3) schräg angestellt ist.
